# EUROPEAN PATENT SPECIFICATION

(11) **EP 1 235 478 B1**
(45) Date of publication and mention of the grant of the patent: **07.05.2003**
(21) Application number: 00958328.7
(22) Date of filing: 31.07.2000
(51) Int. Cl.: A01F 11/06, A01F 12/44

(54) **ROTARY THRESHING AND SEPARATION UNIT**
DRESCH UND ABSCHEIDROTOR
UNITE ROTATIVE DE BATTAGE ET DE SEPARATION

(30) Priority: 29.09.1999 GB 9922977
(43) Date of publication of application: 04.09.2002
(73) Proprietor: CLAAS Selbstfahrende Erntemaschinen GmbH, 33428 Harsewinkel (DE)
(72) Inventor: VISAGIE, Andrie, 9660 Bothaville (ZA)
(86) International application number: EP0007374
(87) International publication number: WO01022798

(56) References cited:
- WO-A-97/29628
- DE-A- 3 447 517
- FR-A- 1 201 847
- US-A- 1 604 912
- US-A- 1 951 070

## Description

This patent application refers to a rotary threshing and separation unit, comprising a rotor housing with a feeding zone, a separation zone and a discharge zone, parts of the circumferential housing being closed and other parts having openings, a rotary driven threshing and separation rotor arranged in said rotor housing, beater plates fixed on said threshing and separation rotor, and sucking air flow stream generating means sucking an air flow stream from the discharge zone through the rotor housing. Such rotary separation units are used in combine harvesters.

Such a rotary threshing and separation unit is known from PCT/US 97/02432. The separation rotor does not only thresh and separate, it also is capable of cleaning harvested grain. However, for reason of simplification the rotor is called threshing and separation rotor further on. The feeding action inside of the rotor is generated by the air flow stream which sucks the harvested grain through the rotor housing. Under difficult harvesting conditions the air flow stream might not be strong enough to suck through even wet harvesting material and big volumes of harvested grain. A possibility to increase the performance of the threshing and separation unit would be an increase of blower performance. However, if the blower performance is increased, but the diameter of the rotor housing remains the same, the wind speed becomes so fast that grain kernels are blown out of the rotor housing, which means an increase of unacceptable losses. There are baffle plates arranged underneath the rotor housing to deviate the air flow stream into the auxiliary grain exit, however, they do not have any capability to avoid that grain losses occur through the end portion of the rotor housing.

Accordingly, it is the subject of this invention to increase the feeding performance of a rotary threshing and separation unit with a sucking blower at the end without an increase of grain losses.

This can be achieved, if there are guiding elements arranged in the discharge zone, which are projecting over the inner surface of the rotor housing to an extent to which they allow straw and chaff to be sucked out of the rotor housing but retain grain kernels inside. With this guiding elements higher losses do not occur even if the air flow stream speed of the transporting speed of the harvested crop inside of the rotor housing is increased because the guiding elements arranged in the discharge zone retain the grain kernels. In the discharge zone the harvested crop consisting of the fractions straw, grain kernels and chaff reaches its highest rotational speed. Also the air flow stream reaches its highest speed. These high speeds have the effect that the heavier fractions of the harvested good move along the inner surface of the rotor housing with high centrifugal energy. When the air flow stream collides with the guiding elements and supersedes them with a bended movement, this bended movement of the air flow stream is not strong enough to suck the rotating grain kernels over the projection of the guiding elements. On the other hand, the bended movement of the air flow stream causes an air turbulence around the guiding elements which is nevertheless strong enough to lift lighter fractions of harvested crop like straw or chaff over the protrusion of the guiding elements. Accordingly, the guiding element helps to separate grain kernels from other fractions, they allow straw and chaff to exit the rotor housing through the discharge zone, but they keep the grain kernel inside of the rotor housing.

According to another improvement, there are helical vanes at least in the first half of the length of the rotor housing, said vanes are projecting over the inner surface of the rotor housing and these vanes are inclined towards the feeding direction of the harvested crop to support the feeding action. A better feeding action in the first half of the length of the rotor can be achieved by these elements, so that the harvested crop is accelerated faster and comes into rotational movement earlier. If the angle of inclinement of the helical vanes is adjustable, the feeding action inside of the rotor housing can be regulated.

According to another preferred embodiment, the guiding elements are inclined towards the feeding direction of the harvested crop to deflect grain kernels against the feeding direction of the harvested crop. If the grain kernels hit the guiding elements with their high speed from the axial movement, they are not just retained but thrown back into the rotor housing. If the sieve means are arranged in proximity towards the guiding elements, then the grain kernels thrown back can exit the rotor housing through the openings in the sieve means. An allocation of a plurality of grain kernels in front of the guiding elements can be avoided. Of course, there also may be arranged guiding elements upon the inner surface of the sieve means in the discharge zone.If the angle of inclinement of the guiding elements is adjustable, they can be adapted in their function towards the present working conditions, like type of grain or humidity of the harvested crop.

If the axis of the rotor housing is inclined by at least 20°, the separation of the grain kernels is improved because the gravitational forces help the guiding elements to throw them back into the rotor housing. If the air flow stream generating means suck at least a part of the sucked air volume through the openings in the sieve means into the rotor housing, a stronger sir flow stream can be achieved.

Instead of stationary fixed guiding elements, it is also possible according to this invention to arrange rotatably driven guiding elements in the discharge zone with deflection surfaces which are inclined towards the direction of the air flow stream passing the guiding elements. With such rotatably arranged guiding elements, the same positive effects can be achieved as described above. Grain kernels which are going to be sucked out of the rotor housing are kicked back into the sieves and may exit the rotor housing through them, whereas the lighter fraction of the harvested crop is passing the guiding elements and blown away by the air flow stream. Due to the rotational movement of the guiding elements according to this embodiment of the invention they can transfer a higher power impact upon the grain kernels, and by this they are thrown back into the rotor housing more aggressively and further backwards as with the stationary guiding elements.

In one embodiment the rotatably driven guiding elements are fixed to the shaft of the sucking air flow stream generating means. This makes it easy to arrange and drive them. It is also advantageous if the guiding elements are only effective in the outer cross-sectional zone of the discharge end of the rotor housing, because then the air flow stream is not obstructed in the inner cross-sectional zone and it is easier for the straw and chaff fraction to be distributed to and blown out by the blower.

The advantages of this invention will become apparent upon consideration of the following detailed disclosure of the invention, especially when it is taken in conjunction with the accompanying drawings wherein:
- Fig. 1: is a side elevation of the first embodiment of the threshing and separation unit,
- Fig. 2: is a schematic illustration of the air flow stream around the guiding means,
- Fig. 3: is a view from the top upon an discharging zone end of a rotor housing,
- Fig. 4: a cut-out view upon a portion of material in the discharge zone showing an example how the guiding elements may be looking like,
- Fig. 5: is a side elevation of the second embodiment of the threshing and separation unit with the rotatably driven guiding elements,
- Fig. 6: shows a more detailed view upon the discharging zone of the second embodiment,
- Fig. 7: shows a cross-sectional view along line VI-VI of Fig. 6
- Fig. 8: shows an example how the guiding elements may be furnished with edges,
- Fig. 9: shows another example how the guiding elements may be formed.

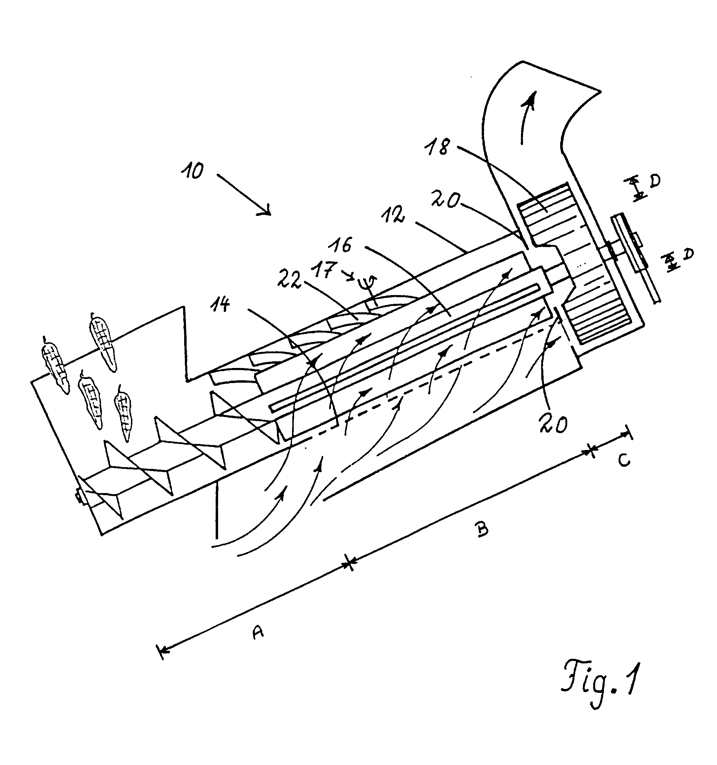

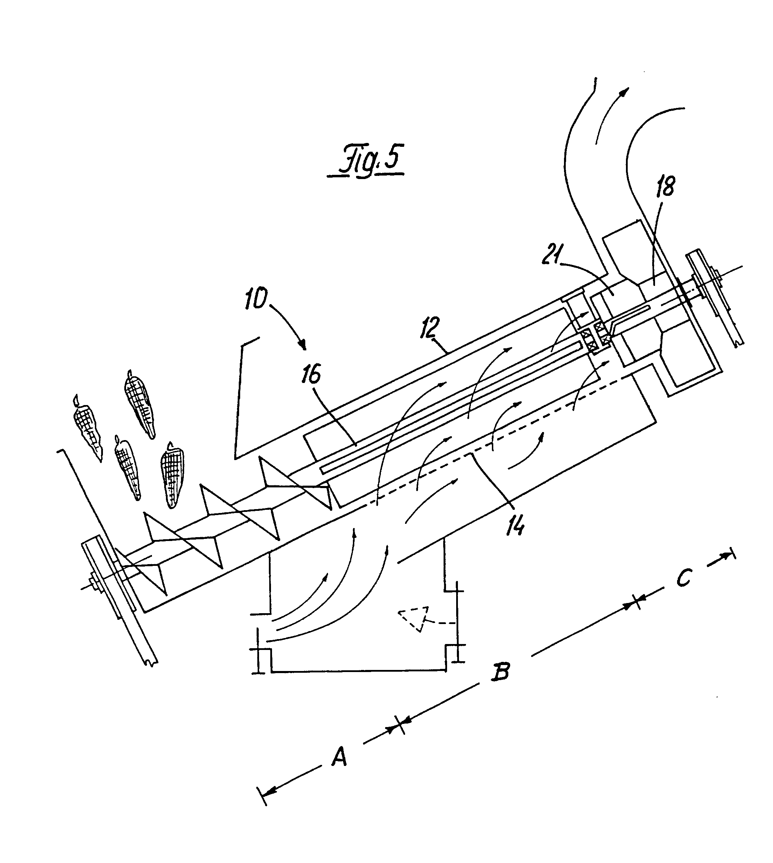

In Fig. 1 there is shown a separation unit 10. It includes a rotor housing 12 with a feeding zone A, a separation zone B and a discharge zone C, sieve means 14 arranged at least in said separation zone B, a rotary driven separation rotor 16 arranged in said housing 12, and a sucking air flow stream generating means 18 generating a sucking air flow stream moving through the rotor housing 12. At the downstream end of rotor housing 12 in the discharge zone C there are guiding elements 20. They are projecting over the inner surface of the rotor housing by distances D. Of course, the distances D shown in the drawing are selected as an example, depending on the working conditions it might already be sufficient that distance D is only a few millimeters tall. Under all conditions, however, a maximum projection of 3 cm over the inner surface of the rotor housing is sufficient. The guiding elements 20 may be projections which are stamped into the inner surface of the discharging zone C, but they may also be melted up by welding, or they may comprise of formed elements which are screwed, fixed with clips, riveted or pressure joined upon the surface, as shown in Fig. 4. The guiding elements 20 should have a smooth and rounded surface where they get in contact with the harvested material to avoid kernel breakage.

When the harvested crop is moving axially through rotor housing 18, most of the threshed grain gets separated by exiting the rotor housing through the openings in the sieve means 14. However, under heavy workload or difficult harvesting conditions there still might be some grain kernels in the harvested crop, when it reaches the discharging zone C. The feeding action inside of the rotor housing 12 can be improved, if there are helical vanes 22 attached to the inner surface of the rotor housing. They are inclined towards the feeding direction, so that if the harvested crop gets in contact with the surface of helical vanes 22, it is pushed forward in an axial movement towards the discharging zone C. Number, shape and location of the helical vanes 22 may be selected as required. One or more of the helical vanes 22 may be adjustable in the relative inclination towards the feeding direction by an adjustment element 17. By this, there is achieved a system which is capable of accelerating the harvested crop into a high helical movement alongside the inner surface of a rotor housing, but also kicking back those fractions in the bulk of harvested good which are heavier and thereby sorting out the potential grain losses from the material exiting the rotor housing.

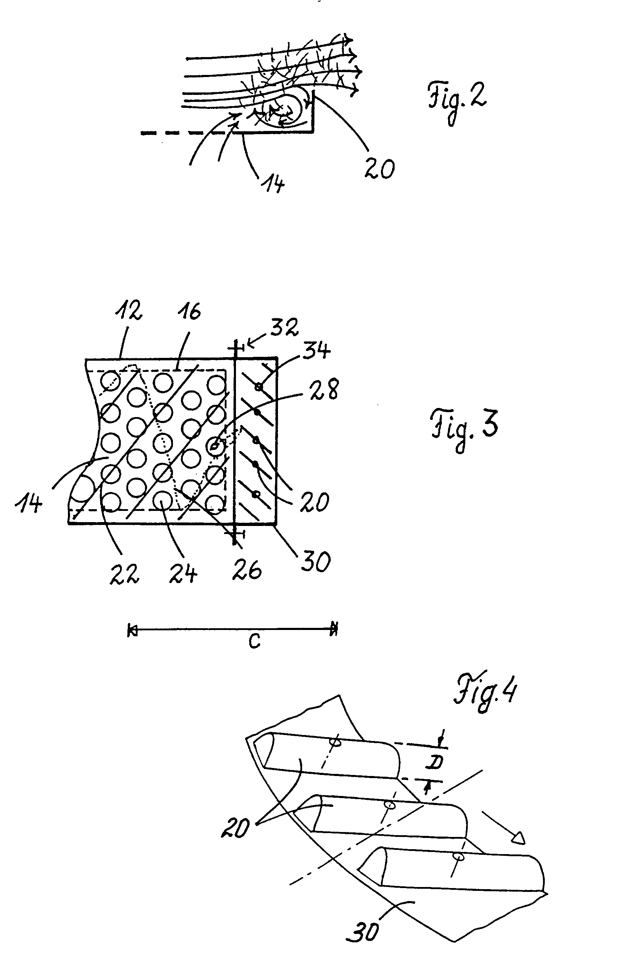

The movement of the lighter fractions of the harvested good in the discharging zone C is dependent from the direction of the air flow stream. The principle of the air flow stream is illustrated in Fig. 2. The air flow stream reaches the guiding element 20. Because a part of the air flow stream hits the guiding element 20, it is deviated and thrown back. There it might meet parts of an air flow stream sucked into the rotor housing 12 through the openings of sieve means 14. Together it causes a turbulence which sucks out lighter fractions of the harvested crop from the edge between the guiding element 20 and sieve means 14. The whirled up lighter fractions of the harvested crop reach the main air flow stream, by which they are blown out of the rotor housing 12.

Because the grain kernels have a higher specific weight than straw or chaff, they usually move directly over the inner surface of the rotor housing 12. The effect of the guiding elements 20 is illustrated in Fig. 3. Fig. 3 shows a view from above upon the discharging zone c of a rotor housing 12. Threshing and separation rotor 16 is shown in broken lines, under the top cover of the rotor housing 12 there is a plurality of helical vanes 22. Underneath the threshing and separation rotor 16 are the sieve means 14, which have openings 24. The grain kernels reach their highest speed when they reach the discharging zone C. A possible moving path 26 of a grain kernel 28 is shown in dotted lines. When the grain kernel 28 hits the guiding element 20 in the discharging zone C, it is very fast, and due to its axial movement it hits the guiding element 20 with a relative angle. According to the rule, that the angle of incidence is equal to the angle of reflection, a grain kernel which hits guiding elements 20 pops back upstream into the separation zone B or, if there are also sieve means 14 with openings 24 in the discharging zone C, they can stay in the discharging stone C. A grain kernel 28 will loose speed by this, however, it will be reaccelerated by the subsequent rotating mass of harvested crop and by the beater plates, and it can exit the rotor housing through an opening 24 in the sieve means 14 as it is supposed to do. As can be seen from Fig. 3, the guiding elements 20 may be arranged in a way as it seems to be appropriate. Here, there is a plurality of guiding elements 20 fixed on a ring 30 which can be fixed by screws 32 on the rotor housing 12, so that it can be exchanged, if necessary. As indicated by circle 34, the inclination angle of guiding elements 20 may also be adjustable. The guiding elements 20 can also directly be fixed on the sieve means 14, and they can fully or partially deflect grain kernels around the inner circumference of rotor housing 12.

In Fig. 5 it can be seen that instead of stationary guiding elements 20 there are arranged rotatably driven guiding elements 21 which are substantially covering the cross-section of the discharge zone of the rotor housing during their rotational movement.

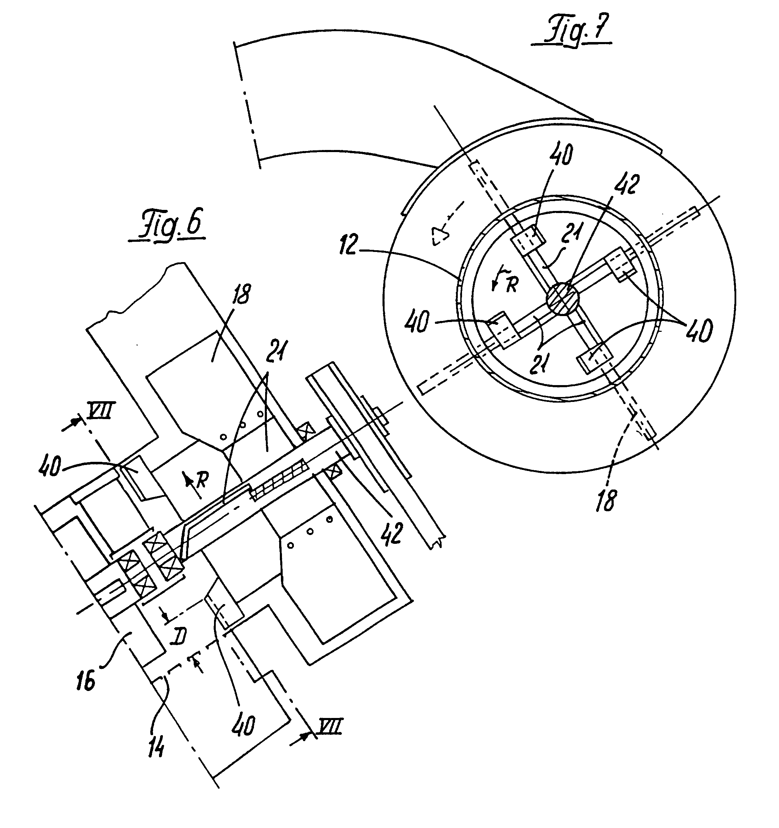

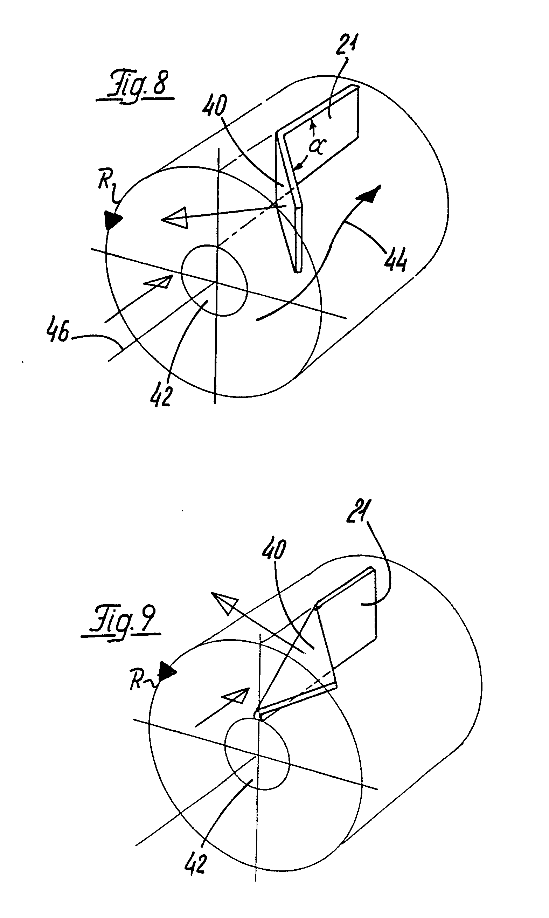

In Fig. 6 it is shown in more detail that the guiding elements 21 are fixed to shaft 42 of the blower which generates the sucking air flow stream. The guiding elements 21 comprise an inclined deflection surface 40. It is important that the inclined deflection surface 40 are at least effective in the outer cross-sectional zone of the discharge end C of the rotor housing 12, because there the most of the grain kernels are accumulated in the mat of harvested good leaving the rotor housing because of the gravitational forces acting upon them. In the example shown in Fig. 6 the deflection surface 40 has an effective height of D', however, this may be adapted as it suits best to the respective application. When the blower 18 is operated, its shaft 42 is rotating into the direction indicated by arrow R. The air flow stream leaving the discharge zone of rotor housing 12 is moving rectangular in relation to the rotational direction of shaft 42 and sucked towards the blades of blower 12. In relation to this, the deflection surfaces 40 of guiding elements 21 are inclined in a way that if heavy fractions of the mat of harvested material leaving the rotor housing in the discharge zone C are kicked back into the rotor housing, whereas the lighter fractions are only slightly deviated in their travel path, they slip along the deflection surface and continue their travel towards blower 18. In Fig. 7 it can be seen that during rotational movement the guiding elements 21 cover a bigger portion of the cross section of the rotor housing 12, however, there is still enough space between the single guiding elements 21 to allow straw and chaff to pass them.

In Fig. 8 the different paths of travel of grain kernels and the general air flow stream is illustrated. Whereas the air flow stream indicated by arrow 44 is only deviated by the guiding elements 21, the grain kernels part being of the harvested material moving out of the rotor housing are hit by a deflection surface 40, and depending from angle a the kernel is kicked back into the rotor housing 12 along the line 46. There it can exit the rotor housing 12 through the openings in sieve 14.

Fig. 9 shows an alternative how the deflection surface can also be achieved other than shown in Fig. 8. By bending the deflection surface along a line which is not rectangular towards the rotational axis of shaft 42 a triangular geometry of the deflection surface 40 can be achieved.

While the preferred structure in which the principles of the present invention have been incorporated is shown and described above it is to be understood that the invention is not to be limited to the particular details thus presented, but in fact, widely different means may be employed in the practice of the broader aspects of this invention. The scope of the appended claims is intended to encompass all obvious changes in the details, materials and arrangements of parts which will occur to one skilled in the art upon a reading of the disclosure.

## Claims

1. Rotary threshing and separation unit (10), comprising a rotor housing (12) with a feeding zone (A), a separation zone (B) and a discharge zone (C), parts of the circumferential housing being closed and other parts having openings, a rotary driven threshing and separation rotor (16) arranged in said rotor housing, beater plates fixed on said threshing and separation rotor, and sucking air flow stream generating means (18) sucking an air flow stream from the discharge zone through the rotor housing,
**characterized in,**
**that** there are guiding elements (20,21) arranged in the discharge zone, which are projecting over the inner surface of the rotor housing to an extent to which they allow straw and chaff to be sucked out of the rotor housing but retain grain kernels (28) inside.

2. Rotary threshing and separation unit as claimed in claim 1,
**characterized in,**
**that** there are helical vanes (22) at least in the first half of the length of the rotor housing, said helical vanes are projecting over the inner surface of the rotor housing and these vanes are inclined towards the feeding direction of the harvested crop to support the feeding action.

3. Rotary threshing and separation unit as claimed in claim 1 or 2,
**characterized in,**
**that** the angle of inclinement of the helical vanes is adjustable.

4. Rotary threshing and separation unit as claimed in any one of claims 1 to 3,
**characterized in,**
**that** the guiding elements are inclined towards the feeding direction of the harvested crop to deflect grain kernels against the feeding direction of the harvested crop.

5. Rotary threshing and separation unit as claimed in any one or more of claims 1 to 4,
**characterized in,**
**that** the angle of inclinement of the guiding elements is adjustable.

6. Rotary threshing and separation unit as claimed in any one or more of claims 1 to 5,
**characterized in,**
**that** the axis of the rotor housing is inclined by at least 20°.

7. Rotary threshing and separation unit as claimed in any one or more of claims 1 to 6,
**characterized in,**
**that** the air flow stream generating means suck at least a part of the sucked air volume through the openings in the sieve means into the rotor housing.

8. Rotary threshing and separation unit as claimed in any one or more of claims 1 to 7,
**characterized in,**
**that** the guiding elements are exchangeable or adjustable.

9. Rotary threshing and separation unit, comprising a rotor housing with a feeding zone, a separation zone and a discharge zone, parts of the circumferential housing being closed and other parts having openings, a rotary driven threshing and separation rotor arranged in said rotor housing, beater plates fixed on said threshing and separation rotor, and sucking air flow stream generating means sucking an air flow stream from the discharge zone through the rotor housing,
**characterized in,**
**that** there are rotatably driven guiding elements arranged in the discharge zone with deflection surfaces which are inclined towards the direction of the air flow stream passing the guiding elements.

10. Rotary threshing and separation unit as claimed in claim 9,
**characterized in,**
**that** the guiding elements are fixed to the shaft of the sucking air flow stream generating means.

11. Rotary threshing and separation unit as claimed in claims 9 or 10,
**characterized in,**
**that** the guiding elements are at least effective in the outer cross-sectional zone of the discharge end of the rotor housing.

## Patentansprüche

1. Drehbare Dresch- und Trenneinheit (10), umfassend ein Rotorgehäuse (12) mit einer Zuführzone (A), einer Trennzone (B) und einer Ausstoßzone (C), wobei Teile des den Umfang umschließenden Gehäuses geschlossen sind und andere Teile Öffnungen aufweisen, einen drehbaren, angetriebenen Dresch- und Trennrotor (16), Dreschplatten, die auf dem Dresch- und Trennrotor befestigt sind, und Ansaugluftstromerzeugungsmittel (18), die einen Luftstrom von der Ausstoßzone durch das Rotorgehäuse saugen,
**dadurch gekennzeichnet,**
**dass** es Führungselemente (20, 21), angeordnet in der Ausstoßzone, gibt, die über die innere Oberfläche des Rotorgehäuses in einem Ausmaß vorragen, in dem sie es Stroh und Spreu erlauben, aus dem Rotorgehäuse hinaus gesaugt zu werden, aber die Getreidekörner (28) innerhalb zurückhält.

2. Drehbare Dresch- und Trenneinheit nach Anspruch 1,
**dadurch gekennzeichnet,**
**dass** es Schraubflügel (22) wenigstens in der ersten Hälfte der Längserstreckung des Rotorgehäuses gibt, wobei diese Flügel in Richtung der Förderrichtung des Ernteguts geneigt sind, um die Zuführung zu unterstützen.

3. Drehbare Dresch- und Trenneinheit nach Anspruch 1 oder 2,
**dadurch gekennzeichnet,**
**dass** der Neigungswinkel der Schraubflügel einstellbar ist.

4. Drehbare Dresch- und Trenneinheit nach jedem der Ansprüche 1 bis 3,
**dadurch gekennzeichnet,**
**dass** die Führungselemente in Richtung der Förderrichtung des Ernteguts geneigt sind, um die Getreidekörner gegen die Förderrichtung des Ernteguts abzulenken.

5. Drehbare Dresch- und Trenneinheit nach jedem der Ansprüche 1 bis 4,
**dadurch gekennzeichnet,**
**dass** der Neigungswinkel der Führungselemente einstellbar ist.

6. Drehbare Dresch- und Trenneinheit nach jedem der Ansprüche 1 bis 5
**dadurch gekennzeichnet,**
**dass** die Achse des Rotorgehäuses wenigstens 20° geneigt ist.

7. Drehbare Dresch- und Trenneinheit nach jedem der Ansprüche 1 bis 6,
**dadurch gekennzeichnet,**
**dass** die Luftstromerzeugungsmittel wenigstens einen Teil des angesaugten Luftvolumens durch die Öffnungen in den Siebmitteln in das Rotorgehäuse ansaugen.

8. Drehbare Dresch- und Trenneinheit nach jedem der Ansprüche 1 bis 7,
**dadurch gekennzeichnet,**
**dass** die Führungselemente austauschbar oder einstellbar sind.

9. Drehbare Dresch- und Trenneinheit, umfassend ein Rotorgehäuse mit einer Zuführzone, einer Trennzone und einer Ausstoßzone, wobei Teile des den Umfang umschließenden Gehäuses geschlossen sind und andere Teile Öffnungen aufweisen, einen drehbaren, angetriebenen Dresch- und Trennrotor, Dreschplatten, die auf dem Dresch- und Trennrotor befestigt sind, und Ansaugluftstromerzeugungsmittel, die einen Luftstrom von der Ausstoßzone durch das Rotorgehäuse saugen,
**dadurch gekennzeichnet,**
**dass** es drehbar angetriebene Führungselemente, angeordnet in der Ausstoßzone, mit Abprallflächen gibt, die in Richtung des Luftstromes geneigt sind, der an den Führungselementen vorbeiführt.

10. Drehbare Dresch- und Trenneinheit nach Anspruch 9
**dadurch gekennzeichnet,**
**dass** die Führungselemente an der Welle der Ansaugluftstromerzeugungsmittel befestigt sind.

11. Drehbare Dresch- und Trenneinheit nach Anspruch 9 oder 10,
**dadurch gekennzeichnet,**
**dass** die Führungselemente wenigstens in der äußeren Querschnittszone des Ausstoßendes des Rotorgehäuses wirksam sind.

## Revendications

1. Unité rotative de battage et de séparation (10) comprenant une enveloppe de rotor (12) avec une zone d'entrée (A), une zone de séparation (B) et une zone de sortie (C), des parties de l'enveloppe périphérique étant fermées et d'autres parties étant pourvues d'ouvertures, un rotor de battage et de séparation (16) entraîné en rotation, disposé à l'intérieur de ladite enveloppe de rotor, des plaques de battage fixées sur ledit rotor de battage et de séparation ainsi que des moyens (18) de génération d'un écoulement d'air d'extraction, qui aspirent de l'air depuis la zone de sortie à travers l'enveloppe de rotor,
**caractérisée en ce que**
dans la zone de sortie sont disposés des éléments de guidage (20, 21) qui s'avancent à l'intérieur de l'enveloppe de rotor d'une valeur telle qu'ils permettent l'extraction de la paille et du son hors de l'enveloppe de rotor mais retiennent les grains de céréales (28) à l'intérieur.

2. Unité rotative de battage et de séparation selon la revendication 1, **caractérisée en ce que** des ailettes hélicoïdales (22) sont prévues au moins dans la première moitié de la longueur de l'enveloppe de rotor, lesdites ailettes hélicoïdales s'avançant à l'intérieur de l'enveloppe de rotor et étant inclinées dans la direction d'introduction du produit récolté afin de renforcer l'action d'alimentation.

3. Unité rotative de battage et de séparation selon la revendication 1 ou la revendication 2, **caractérisée en ce que** l'angle d'inclinaison des ailettes hélicoïdales est réglable.

4. Unité rotative de battage et de séparation selon une quelconque des revendications 1 à 3, **caractérisée en ce que** les éléments de guidage sont inclinés dans la direction d'introduction du produit récolté, aux fins de dévier les grains de céréales dans la direction opposée à la direction d'introduction du produit récolté.

5. Unité rotative de battage et de séparation selon une quelconque des revendications 1 à 4, **caractérisée en ce que** l'angle d'inclinaison des éléments de guidage est réglable.

6. Unité rotative de battage et de séparation selon une quelconque des revendications 1 à 5, **caractérisée en ce que** l'axe de l'enveloppe de rotor est incliné d'au moins 20°.

7. Unité rotative de battage et de séparation selon une quelconque des revendications 1 à 6, **caractérisée en ce que** les moyens (18) de production d'un écoulement d'air aspirent au moins une partie du volume d'air aspiré dans l'enveloppe de rotor via les ouvertures aménagées dans le crible.

8. Unité rotative de battage et de séparation selon une quelconque des revendications 1 à 7, **caractérisée en ce que** les éléments de guidage sont remplaçables ou réglables.

9. Unité rotative de battage et de séparation, comprenant une enveloppe de rotor avec une zone d'entrée et une zone de sortie, des parties de l'enveloppe périphérique étant fermées et d'autres parties étant pourvues d'ouvertures, un rotor de battage et de séparation entraîné en rotation, disposé à l'intérieur de ladite enveloppe de rotor, des plaques de battage fixées sur ledit rotor de battage et de séparation ainsi que des moyens (18) de production d'un écoulement d'air d'extraction qui aspirent de l'air depuis la zone de sortie à travers l'enveloppe de rotor,
**caractérisée en ce que**
dans la zone de sortie, sont disposés des éléments de guidage avec des surfaces déflectrices qui sont inclinées dans la direction du flux d'air traversant les éléments de guidage.

10. Unité rotative de battage et de séparation selon la revendication 9, **caractérisée en ce que** les éléments de guidage sont fixés à l'arbre du moyen de génération de l'écoulement d'air d'extraction.

11. Unité rotative de battage et de séparation selon la revendication 9 ou 10, **caractérisée en ce que** les éléments de guidage sont actifs au moins dans la portion de section transversale externe de l'extrémité de sortie de l'enveloppe de rotor.
